# EUROPÄISCHE PATENTSCHRIFT

(11) **EP 3 179 115 B1**
(45) Veröffentlichungstag und Bekanntmachung des Hinweises auf die Patenterteilung: **26.06.2019**
(21) Anmeldenummer: 16202500.1
(22) Anmeldetag: 06.12.2016
(51) Int. Cl.: F16B 15/06

(54) **BEFESTIGUNGSELEMENT MIT GRUPPEN VON VERANKERUNGSELEMENTEN MIT IN UNTERSCHIEDLICHEN GRUPPEN UNTERSCHIEDLICHEN AUSSENDURCHMESSERN**
FASTENING ELEMENT WITH GROUPS OF ANCHORING ELEMENTS WITH DIFFERENT OUTSIDE DIAMETERS IN DIFFERENT GROUPS
ÉLÉMENT DE FIXATION AVEC DES GROUPES D'ÉLÉMENTS D'ANCRAGE AVEC DIFFÉRENTS DIAMÈTRES EXTÉRIEUR DANS DIFFÉRENTS GROUPES

(30) Priorität: 07.12.2015 DE 102015121212
(43) Veröffentlichungstag der Anmeldung: 14.06.2017
(73) Patentinhaber: Adolf Würth GmbH & Co. KG, 74653 Künzelsau (DE); Würth International AG, 7000 Chur (CH)
(72) Erfinder: ECKERT, Rainer, 97990 Weikersheim (DE); FRANZ, Gerhard, 74549 Wolpertshausen (DE)
(74) Vertreter: Dilg, Haeusler, Schindelmann Patentanwaltsgesellschaft mbH

(56) Entgegenhaltungen:
- EP-A1- 0 012 441
- DE-A1- 3 516 479
- US-A1- 2007 025 829
- US-A1- 2013 067 850

## Beschreibung

Die Erfindung betrifft ein Befestigungselement, eine Anordnung, ein Verfahren zum Herstellen eines Befestigungselements, ein Verfahren zum Einbringen eines Befestigungselements in einen Untergrund und eine Verwendung.

CA 2583890 A1 offenbart eine Schraube und einen Clip mit einer asymmetrischen Gewindewirkung zur Verwendung mit einem Energieeinwirkungsgerät zum Durchdringen von Holzfasern unter Minimierung des Schneidens von Fasern. Die Schraube weist an den Enden eines Schafts einen Einwirkkopf und eine konisch geformte Spitze auf, die einen ballistischen Eindringwinkel aufweist. Der Schaft definiert asymmetrische Gewinde mit einer Eindringflanke, die eine lange Seite an einem Gleitwinkel hat, der an einem Überstand die höchste Stelle hat, unterstützt von einer Fangflanke, die an einem Griffwinkel positioniert ist.

DE 12 38 725 A offenbart einen Stahlnagel, dessen Eintreibschaft mit einer Eintreibspitze am einen und mit einem Nagelkopf am anderen Ende versehen ist, wobei im Bereich hinter der Eintreibspitze eine sich über eine Teillänge des Schaftes erstreckende axiale Riffelung vorgesehen ist.US 364,300 A offenbart einen Nagel, welcher einen Kopf, einen aufgerauten Schaftabschnitt angrenzend an den Kopf, eine Spitze und einen konisch geformten mit einem Schraubgewinde oder Widerhaken versehenen Abschnitt aufweist.

JP H06-48 166 Y2 offenbart einen Nagel, welcher einen Kopf, einen an den Kopf angrenzenden Schaftabschnitt 14 und eine Spitze 5 aufweist. Zwischen dem Schaftabschnitt und der Spitze sind abwechselnd erste Abschnitte und zweite Abschnitte angeordnet. Jeder der ersten Abschnitte weist spiralförmig ausgebildete Vorsprünge auf. Jeder der zweiten Abschnitte weist eine Mehrzahl von sich konisch zur Spitze hin verjüngenden Ringstrukturen auf. Der Außendurchmesser der ersten Abschnitte ist jeweils gleich und der Außendurchmesser der zweiten Abschnitte ist jeweils gleich sowie unterschiedlich zu dem Außendurchmesser der ersten Abschnitte.

US 2006/0 234 801 A1 offenbart einen Nagel. Der Nagel umfasst einen Schaft mit einer Mehrzahl von Gewindegängen, einen an ein Ende des Schafts verbundenen Spitzenabschnitt und eine Mehrzahl von Flügeln an dem Spitzenabschnitt.

US 2007/0 025 829 A1 offenbart ein Befestigungselement zum Befestigen von Palettenelementen aneinander.

EP 0 012 441 A1 offenbart eine selbstfurchende Bohrschraube.

Wenn zum Beispiel beim Bau eines Hauses ein Holzbalken an einem anderen Holzbalken, einer Betonstruktur oder einem anderen Untergrund befestigt wird, werden hierfür sogenannte Balkenschuhe verwendet. Dabei handelt es sich um Profile, die aus Metall hergestellt sein können, und die mit dem Holzbalken verbunden werden können, um den Holzbalken zum Beispiel ebenfalls mittels dieser Profile mit einem anderen Körper zu verbinden. Hierfür ist es herkömmlich erforderlich, Schrauben durch den Balkenschuh in den Holzbalken einzudrehen. Die hierbei erreichbaren Haltekräfte der Schraube in dem Holz erfordern es häufig, relativ viele Schrauben einzusetzen, die durch einen Balkenschuh geführt werden und in dem Holzbalken verankert werden.

Es ist eine Aufgabe der vorliegenden Erfindung, ein kompaktes Befestigungselement mit hoher Haltekraft bereitzustellen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist ein (insbesondere als Nagel ausgebildetes) Befestigungselement zum Einbringen in einen Untergrund geschaffen, wobei das Befestigungselement einen sich axial erstreckenden Schaftabschnitt, eine sich an den Schaftabschnitt anschließende Endspitze, und eine Mehrzahl von Gruppen von Verankerungsstrukturen an dem Schaftabschnitt aufweist (wobei insbesondere jeder der Gruppen ein zusammenhängender Axialbereich entlang des Schaftabschnitts zugeordnet sein kann, sodass die Gruppen in Axialerstreckungsrichtung seriell bzw. hintereinander angeordnet sind), wobei sich die Verankerungsstrukturen (insbesondere alle Verankerungsstrukturen) hin zu der Endspitze verjüngen, wobei ein äußerster Durchmesser (bzw. ein äußerster Durchmesserbereich) für unterschiedliche der Gruppen von Verankerungsstrukturen unterschiedlich ist. Optional kann insbesondere ein äußerster Durchmesser (bzw. ein äußerster Durchmesserbereich) für alle Verankerungsstrukturen einer jeweiligen Gruppe von Verankerungsstrukturen gleich sein oder kann in einem gruppenspezifischen Bereich liegen, in dem der jeweilige äußerste Durchmesser (bzw. äußerste Durchmesserbereich) von Verankerungsstrukturen einer jeweiligen anderen Gruppe nicht liegt.

Gemäß einem anderen Ausführungsbeispiel der vorliegenden Erfindung ist eine Anordnung zum Verbinden eines Holzuntergrunds (insbesondere eines Holzbalkens, weiter insbesondere aus Massivholz) mit einem Profil (insbesondere ein zum Beispiel aus Metall hergestellter Balkenschuh, der zum Aufnehmen eines Holzbalkens dimensioniert und geformt sein kann und ein oder mehrere Durchgangslöcher zum Aufnehmen eines jeweiligen Befestigungselements aufweisen kann) bereitgestellt, wobei die Anordnung ein Befestigungselement mit den oben beschriebenen Merkmalen und das Profil aufweist (sowie optional zusätzlich den Holzuntergrund aufweist), wobei das Befestigungselement und das Profil derart ausgebildet sind, dass das Befestigungselement unter Ausbildung einer Verbindung zwischen dem Holzuntergrund und dem Profil durch das Profil (insbesondere durch ein Durchgangsloch in dem Profil) hindurch in den Holzuntergrund einbringbar ist.

Gemäß einem weiteren Ausführungsbeispiel der vorliegenden Erfindung ist ein Verfahren zum Herstellen eines Befestigungselements zum Einbringen in einen Untergrund bereitgestellt, wobei bei dem Verfahren ein sich axial erstreckender Schaftabschnitt ausgebildet wird, eine sich an den Schaftabschnitt anschließende Endspitze ausgebildet wird, und eine Mehrzahl von Gruppen von Verankerungsstrukturen an dem Schaftabschnitt ausgebildet wird, die sich hin zu der Endspitze derart verjüngen, dass ein äußerster Durchmesser für unterschiedliche der Gruppen von Verankerungsstrukturen unterschiedlich ist.

Gemäß einem weiteren Ausführungsbeispiel der vorliegenden Erfindung wird ein Verfahren zum Einbringen eines Befestigungselements mit den oben beschriebenen Merkmalen in einen Untergrund geschaffen, wobei das Befestigungselement in den Untergrund unter Einwirkung einer rein axialen Setzkraft (insbesondere eingeschossen, zum Beispiel mittels eines Bolzensetzgeräts, oder eingeschlagen, zum Beispiel mittels eines Hammers) und/oder unter Einwirkung einer zumindest auch tangentialen bzw. in Umfangsrichtung wirkenden Setzkraft (insbesondere eingedreht, zum Beispiel mittels eines Schraubendrehers) eingebracht wird.

Gemäß einem weiteren Ausführungsbeispiel der vorliegenden Erfindung wird ein Befestigungselement mit den oben beschriebenen Merkmalen zum (insbesondere vorbohrungsfreien) Einbringen in einen Holzuntergrund (insbesondere in einen Massivholzuntergrund) zum Verbinden des Holzuntergrunds mit einem Profil (insbesondere mit einem Balkenschuh) verwendet.

Im Rahmen der vorliegenden Anmeldung wird unter dem Begriff "Verankerungsstruktur" insbesondere eine sich endseitig verjüngende Substruktur an dem Schaftabschnitt verstanden, die sich bei Eintreiben in den Untergrund in demselben unter Ausbildung einer Haltekraft verkeilt, wobei sich auch verdrängtes Material des Untergrunds in Bereichen und zwischen Bereichen von Verankerungsstrukturen haltekraftverstärkend sammeln kann.

Im Rahmen der vorliegenden Anmeldung wird unter dem Begriff "Gruppe von Verankerungsstrukturen" insbesondere eine jeweilige Teilmenge mehrerer Verankerungsstrukturen verstanden, wobei ein einer jeweiligen Gruppe zugeordneter Satz von Verankerungsstrukturen in Axialerstreckungsrichtung des Befestigungselements unmittelbar aneinander angrenzen, d.h. nicht von Verankerungsstrukturen unterbrochen wird, die dieser Gruppe nicht angehören. Die Verankerungsstrukturen einer jeweiligen Gruppe können darüber hinaus im Unterschied zu Verankerungsstrukturen einer jeweiligen anderen Gruppe dadurch charakterisiert sein, dass sie eine gemeinsame Erstreckungsweite einer Verankerungsstruktur in Axialerstreckungsrichtung aufweisen oder innerhalb einer gruppenspezifischen Bandbreite der Erstreckungsweite in Axialerstreckungsrichtung liegen, innerhalb derer die Verankerungsstrukturen anderer Gruppen nicht liegen (zum Beispiel können alle Verankerungsstrukturen einer ersten Gruppe eine Erstreckungsweite in Axialerstreckungsrichtung von 1,4 mm oder in einem Bereich zwischen 1,35 mm und 1,45 mm aufweisen, können alle Verankerungsstrukturen einer zweiten Gruppe eine Erstreckungsweite in Axialerstreckungsrichtung von 1,8 mm oder in einem Bereich zwischen 1,75 mm und 1,85 mm aufweisen und können alle Verankerungsstrukturen einer dritten Gruppe eine Erstreckungsweite in Axialerstreckungsrichtung von 2,0 mm oder in einem Bereich zwischen 1,95 mm und 2,05 mm aufweisen). Alternativ oder ergänzend ist es ebenfalls möglich, dass die Verankerungsstrukturen einer jeweiligen Gruppe im Unterschied zu Verankerungsstrukturen einer jeweiligen anderen Gruppe dadurch charakterisiert sind, dass sie eine gemeinsame Erstreckungsweite einer Verankerungsstruktur in radialer Richtung (d.h. einen jeweiligen äußersten Durchmesser) aufweisen oder innerhalb einer gruppenspezifischen Bandbreite der Erstreckungsweite in radialer Richtung liegen, innerhalb derer die Verankerungsstrukturen anderer Gruppen nicht liegen (zum Beispiel können alle Verankerungsstrukturen einer ersten Gruppe eine Erstreckungsweite in radialer Richtung von 3,8 mm oder in einem Bereich zwischen 3,8 mm und 3,9 mm aufweisen, können alle Verankerungsstrukturen einer zweiten Gruppe eine Erstreckungsweite in radialer Richtung von 4,2 mm oder in einem Bereich zwischen 4,2 mm und 4,3 mm aufweisen und können alle Verankerungsstrukturen einer dritten Gruppe eine Erstreckungsweite in radialer Richtung von 4,5 mm oder in einem Bereich zwischen 4,5 mm und 4,8 mm aufweisen).

Gemäß einem exemplarischen Ausführungsbeispiel wird ein Befestigungselement bereitgestellt, das zum Beispiel für die Befestigung von Profilen an Untergründen eingesetzt werden kann und in einem solchen Untergrund mit einer hohen Haltekraft verankert werden kann. Dies erfolgt dadurch, dass Gruppen von hin zu einer Endspitze des Befestigungselements zulaufenden Verankerungsstrukturen mit unterschiedlichen Maximalaußendurchmessern bzw. Maximalaußendurchmesserbereichen ausgestattet werden. Dadurch ist es möglich, dass zunächst eine erste Gruppe mit relativ kleinen Außendurchmessern in den Untergrund, zum Beispiel einen massiven Holzuntergrund, eindringt und dabei insbesondere vorbohrungsfrei ein Loch für eine nachfolgende Gruppe von Verankerungsstrukturen mit zum Beispiel etwas größeren Außendurchmessern schafft. Einer axial nachfolgenden Gruppe ist es dann mit vergleichsweise geringerer Eindringkraft möglich, in den Untergrund vorzudringen und bei dieser Vorschubbewegung aufgrund ihres größeren Außendurchmessers aber dennoch unter Erzeugung einer weiteren Haltekraftkomponente weiteres Material des Untergrunds radial zu verdrängen. Diese zweite Gruppe mit einem höheren Maximalaußendurchmesser kann also die Haltekraft in dem Untergrund weiter verbessern, ohne die Eindringkraft ungebührlich zu erhöhen. Das gruppenweise, zum Beispiel sukzessive Erhöhen des Maximalaußendurchmessers in Axialrichtung führt bei dem abgestuft geformten Befestigungselement somit bei mäßiger Setzkraft zu einer hohen Haltekraft. Dies wird zusätzlich durch die sich hin zur Endspitze verjüngenden Verankerungsstrukturen gefördert, da diese aufgrund der so gebildeten Hinterschnitte Aufnahmeräume für verdrängtes Untergrundmaterial schaffen und so ein kraftarmes Herausziehen des Befestigungselements nach dem Setzen hemmen. Besondere Vorteile ergeben sich in diesem Zusammenhang bei Setzen des Befestigungselements in einen Massivholzuntergrund, da sich aufgrund der beschriebenen Formgebung des Befestigungselements die Holzfasern in den Hinterschnitten drängen, ohne aber zerstört zu werden. Dadurch tragen die verdrängten, aber weiterhin intakten Holzfasern zu einer hohen Haltekraft bei.

Gemäß einem exemplarischen Ausführungsbeispiel kann ein kürzeres Befestigungselement mit gleicher Auszugsfestigkeit wie ein längerer herkömmlicher Nagel geschaffen werden. Dies führt neben einer Materialeinsparung auch zu einer kompakteren Bauweise und daher Vorteilen beim Setzen unter beengten Platzverhältnissen. Alternativ kann das Befestigungselement mit gleicher Länge wie der vergleichsweise genannte Nagel ausgebildet werden und dann eine höhere Auszugsfestigkeit haben. Die Auszugskräfte können um annähernd 30 % und mehr erhöht werden. Diese guten Auszugswerte sind auch ein Ergebnis der sich verjüngenden Form der Verankerungselemente mit ihren gruppenweise variierenden maximalen Außendurchmessern. Dadurch kann sich verdrängtes Material in Hinterschnitten zwischen unterschiedlichen Außendurchmesserbereichen sammeln. Diese hohe Auszugsfestigkeit wird bei dem Befestigungselement mit moderaten Eintreibkräften kombiniert, die auf die sich verjüngende Form der Verankerungselemente und deren Gruppierung (unter dem Gesichtspunkt räumlicher Nähe und gleicher oder ähnlicher Außendurchmesser) zurückgeht, infolge derer sich das Befestigungselement pfeilartig durch den Untergrund graben kann. Die hinsichtlich des Außendurchmessers abgestufte Profilierung des Befestigungselements entlang des Schaftabschnitts sorgt dafür, dass anders als bei herkömmlichen Nägeln hintere Bereiche des Befestigungselements in dem Untergrund nicht wackeln und daher ebenfalls einen signifikanten Beitrag zur Auszugsfestigkeit liefern.

Im Weiteren werden zusätzliche exemplarische Ausführungsbeispiele des Befestigungselements, der Anordnung, der Verfahren und der Verwendung beschrieben.

Der äußerste Durchmesser einer jeweiligen, der Endspitze jeweils näheren Gruppe ist kleiner, insbesondere um 5 % bis 15 % kleiner, als der äußerste Durchmesser einer benachbarten, der Endspitze jeweils ferneren Gruppe. Anschaulich weiten die mehreren Gruppen von Verankerungsstrukturen sich von der Endspitze hin zu einem gegenüberliegenden Kopfabschnitt des Befestigungselements stufenweise radial auf. Eine endspitzennächste Gruppe hat dabei den kleinsten maximalen Außendurchmesser, gefolgt von der daran unmittelbar angrenzenden nächsten Gruppe, ..., bis hin zu der letzten Gruppe, die am nächsten zu dem Kopfabschnitt gelegen ist. Dadurch kann der Hohlraum im Untergrund, der von einem jeweils vorangehenden oder weiter vorderseitig angeordneten Gruppe von Verankerungselementen gebildet worden ist, von einer jeweils nachfolgenden Gruppe genutzt und weiter aufgeweitet werden, um relativ kraftarm in den Untergrund einzudringen. Gleichzeitig ist bei einer solchen stufenweise Erhöhung eine hohe Haltekraft erzielbar.

Gemäß einem exemplarischen Ausführungsbeispiel kann eine jeweilige Verankerungsstruktur einer jeweiligen Gruppe, welche Verankerungsstruktur der Endspitze am nahesten ist, einen größeren, insbesondere um 2 % bis 10 % größeren, äußersten Durchmesser haben als die mehreren restlichen Verankerungsstrukturen der jeweiligen Gruppe. Dies hält die Eintreibkräfte moderat, da nach dem Eindringen der vorderseitig lokal in radialer Richtung stärker aufgeweiteten Verankerungsstruktur ein Satz restlicher Verankerungsstrukturen dieser Gruppe folgt, die wieder einen kleineren Außendurchmesser haben und somit kraftarm eingebracht werden können. Anschaulich kann von jeder Gruppe von Verankerungsstrukturen nur die vorderste gegenüber allen anderen Verankerungsstrukturen dieser Gruppe einen leicht erhöhten Außendurchmesser aufweisen. Die restlichen Verankerungsstrukturen der Gruppe können untereinander denselben Außendurchmesser aufweisen. Es ist auch möglich, dass mehr als nur eine vorderseitige Verankerungsstruktur der Gruppe einen im Verhältnis zu den anderen Verankerungsstrukturen der Gruppe leicht vergrößerten Außendurchmesser aufweist, zum Beispiel nur die beiden vordersten. Indem nur eine relative kleine Teilmenge von Verankerungsstrukturen einer jeweiligen Gruppe einen gegenüber den anderen Gruppen-Verankerungsstrukturen leicht erhöhten Außendurchmesser hat, können die Einbringkräfte reduziert und die Auszugskräfte erhöht werden, da die hinteren Verankerungsstrukturen kraftarm gesetzt werden können und die vorderste Verankerungsstruktur als besonders wirksamer Widerhaken beim Ausziehen des Befestigungselements aus dem Untergrund fungiert. Vorzugsweise ist der Unterschied der Außendurchmesser zwischen der radial am meisten aufgeweiteten Verankerungsstruktur einer Gruppe gegenüber den anderen Verankerungsstrukturen dieser Gruppe kleiner als ein Unterschied in der radialen Aufweitung der Verankerungsstrukturen unterschiedlicher Gruppen.

Gemäß einem exemplarischen Ausführungsbeispiel kann eine jeweilige Gruppe eine Mehrzahl restlicher Verankerungsstrukturen (hinter der vordersten, aufgeweiteten Verankerungsstruktur) aufweisen. Vorzugsweise ist die Anzahl restlicher Verankerungsstrukturen erheblich größer als die Anzahl der radial aufgeweiteten mindestens einen vorderseitigen Verankerungsstruktur dieser Gruppe.

Gemäß einem exemplarischen Ausführungsbeispiel kann jede der Mehrzahl restlicher Verankerungsstrukturen einer jeweiligen Gruppe einen identischen größten eigenen Außendurchmesser aufweisen. Auf diese Weise kann im Wesentlichen die gesamte Gruppe von Verankerungsstrukturen ruckartig in den Untergrund eindringen und somit einen im Wesentlichen gemeinsamen Vorschub leisten. Dies liegt daran, dass, wenn im Untergrund das Loch des Durchmessers durch die vorderste Verankerungsstruktur vorgeformt ist, die nachfolgenden Verankerungsstrukturen mit ihrem leicht geringeren Außendurchmesser durch dieses vorgeformte Loch mit relativ geringem Kraftaufwand vorwärts bewegt werden können.

Das dann als Nagel ausgebildete Befestigungselement hat Verankerungsstrukturen als - insbesondere in Umfangsrichtung geschlossene - Ringstruktur. Anschaulich werden die Verankerungsstrukturen als in sich geschlossene Ringe ohne durchgehende (zum Beispiel helikale) Verbindung zu benachbarten anderen Ringen ausgebildet und in axialer Richtung aufgereiht. Wenn jede der Ringstrukturen in Richtung der Endspitze zuläuft, bildet sich im Querschnitt eine rotationssymmetrische Sägezahn- bzw. Pfeilstruktur. Auf diese Weise kann ein Befestigungselement geschaffen werden, das durch eine reine Axialkraft, mithin im Wesentlichen oder vollständig drehungsfrei, in den Untergrund eingetrieben werden kann. Dies kann zum Beispiel durch Einhämmern oder Einschießen bewerkstelligt werden. Durch das Ausgestalten der Verankerungsstrukturen als zueinander parallele und vorzugsweise formgleiche, weiter vorzugsweise rotationssymmetrische Ringstrukturen, wird also ein einfaches Setzen mit einer hohen Auszugskraft kombiniert.

Gemäß einem Ausführungsbeispiel können zwischen den Ringstrukturen Hinterschnitte ausgebildet sein. Dadurch können in bestimmten Abständen Aufnahmevolumina für das beim Eintreiben des Befestigungselements in den Untergrund verdrängten Materials, insbesondere von Holzfasern, gebildet werden. Somit können die Holzfasern in die entsprechenden Aufnahmevolumina gedrängt werden und vor einem Auftrennen oder einer sonstigen Zerstörung geschützt werden, was wiederum die Auszugskräfte erhöht.

Gemäß einem alternativen exemplarischen Ausführungsbeispiel ausserhalb des beanspruchten Schutzumfangs kann zumindest ein Teil der Verankerungsstrukturen als helikal um den Schaftabschnitt umlaufende Gewindestrukturen ausgebildet sein. Gemäß dieser Ausgestaltung ist das Befestigungselement zumindest abschnittsweise schraubenähnlich ausgebildet. Ein solches Befestigungselement kann in den Untergrund eingedreht werden oder mit relativ hoher Kraft eingeschlagen oder eingeschossen werden.

Gemäß einem exemplarischen Ausführungsbeispiel kann sich zumindest ein Teil der Verankerungsstrukturen hin zu der Endspitze konisch verjüngen. Die Außenfläche der Verankerungsstrukturen können dann auf einem jeweiligen Konusmantel liegen. Insbesondere können die Verankerungsstrukturen dann als kegelstumpfartige Körper ausgebildet werden. Die konisch zulaufende Ausgestaltung fördert das kraftarme Eindringen des Befestigungselements in den Untergrund ähnlich wie ein Projektil.

Gemäß einem exemplarischen Ausführungsbeispiel können mindestens drei Gruppen von Verankerungsstrukturen vorgesehen sein. Durch das Vorsehen mindestens dreier Gruppen können die Kraftverhältnisse beim Einbringen und Ausziehen des Befestigungselements weiter verfeinert werden.

Gemäß einem exemplarischen Ausführungsbeispiel kann jede der Gruppen zwischen 3 und 10 Verankerungsstrukturen aufweisen, insbesondere zwischen 4 und 8 Verankerungsstrukturen aufweisen. Zum Beispiel kann die Anzahl von Verankerungsstrukturen pro Gruppe zwischen 5 und 7 betragen.

Gemäß einem exemplarischen Ausführungsbeispiel kann eine jeweilige, der Endspitze nähere Gruppe eine jeweils größere Anzahl von Verankerungsstrukturen aufweisen als eine jeweilige, der Endspitze fernere Gruppe. Insbesondere kann die Anzahl von Verankerungsstrukturen pro Gruppe von der Endspitze hin zum Kopfabschnitt sukzessive bzw. kontinuierlich abnehmen. Gleichzeitig kann der Außendurchmesser von der Endspitze her in Richtung des Kopfabschnitts sukzessive zunehmen. Es hat sich gezeigt, dass dies zu hohen Auszugskräften führt.

Gemäß einem exemplarischen Ausführungsbeispiel können die Verankerungsstrukturen einer jeweiligen, der Endspitze näheren Gruppe eine jeweils kürzere Axialerstreckung haben (mithin axial dichter gedrängt sein) als die Verankerungsstrukturen einer jeweiligen, der Endspitze ferneren Gruppe. Anders ausgedrückt können näher an der Endspitze angeordnete Verankerungsstrukturen axial dichter gestaffelt sein als bei den von der Endspitze weiter entfernteren Verankerungsstrukturen. Anschaulich können dann umso mehr Ringe pro Axialabstand vorgesehen sein, je näher sich die Ringe an der Endspitze befinden. Dies hat zum einen Vorteile beim Herstellungsverfahren des Befestigungselements, da beim Walzen des Befestigungselements ausgehend von einem Draht als Halbzeug mehr Material im Bereich der Endspitze (mit eher kleinen Außendurchmessern) untergebracht werden muss als im Bereich entfernt davon (mit eher großen Außendurchmessern). Auch hat diese Maßnahme Vorteile im Hinblick auf die erreichbaren Haltekräfte, da es in den Bereichen des Schaftabschnitts tief im Inneren des Untergrunds dann verhältnismäßig viele Hinterschneidungen bzw. ein verhältnismäßig großes Hinterschneidungsvolumen gibt, in denen bzw. dem sich das verdrängte Untergrundmaterial (insbesondere Holzfasern) sammeln kann.

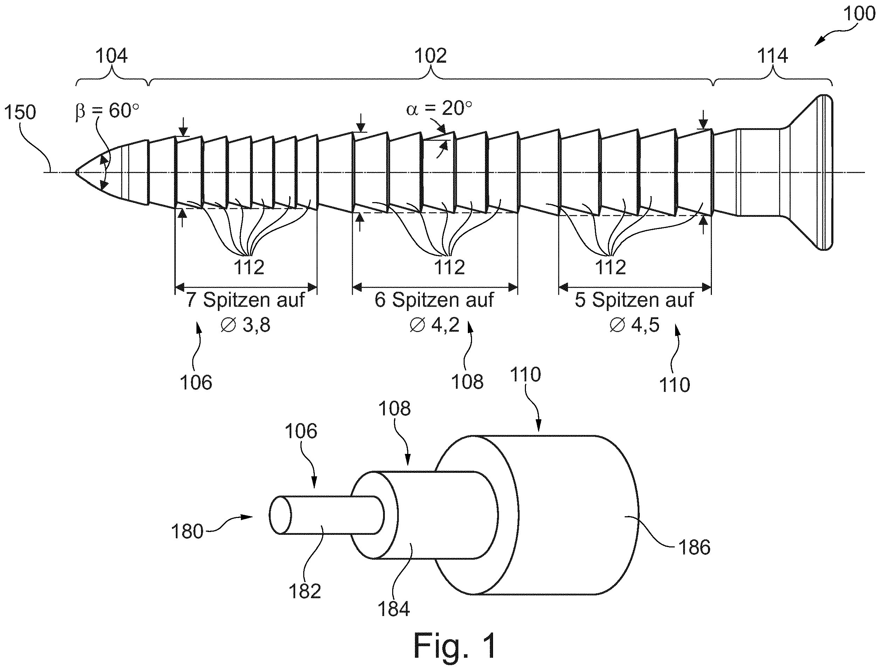

Gemäß einem exemplarischen Ausführungsbeispiel kann eine Einhüllende der Verankerungsstrukturen der Gruppen (und entsprechend des in dem Untergrund durch das Befestigungselement erzeugten Lochs) einer Anordnung von axial aneinandergereihten konzentrischen Kreiszylindern mit hin zur Endspitze stufenweise abnehmenden Zylinderradien entsprechen. Eine solche Ausführungsform ist in Figur 1 dargestellt. Mit einer solchen Abstufung kann erreicht werden, dass im gesetzten Zustand auch relativ nah an der Oberfläche des Untergrunds befindliche Bereiche des Schaftabschnitts signifikant zu den Haltekräften beitragen, da solche kopfnahen Bereiche dann nicht instabil und mit großem Spiel in bereits von kopfferneren Bereichen des Schaftabschnitts vollständig verdrängten Bereichen des Untergrunds angeordnet sind, sondern im gesetzten Zustand fest von direkt benachbartem, komprimierten Untergrundmaterial umgeben sind.

Gemäß einem exemplarischen Ausführungsbeispiel kann sich ein äußerster Durchmesser der Verankerungsstrukturen mit zunehmendem Abstand von der Endspitze in kontinuierlicher Weise stufenweise erhöhen. Gemäß einer solchen Ausgestaltung ist es zum Beispiel möglich, dass mit zunehmendem Abstand von der Endspitze von Verankerungsstruktur zu Verankerungsstruktur der maximale Außendurchmesser inkrementell zunimmt. Die Einhüllende der Verankerungsstrukturen kann dann annähernd pfeilförmig sein. Mit einer solchen Ausgestaltung kann bei allerdings nicht unerheblicher Eintreibkraft eine besonders hohe Auszugskraft erreicht werden.

Gemäß einem exemplarischen Ausführungsbeispiel kann zumindest ein Teil der Verankerungsstrukturen einen Flankenwinkel zwischen einer Axialerstreckungsrichtung des Schaftabschnitts und der sich verjüngenden Außenseite in einem Bereich zwischen 10° und 30° aufweisen. Je flacher der Winkel gewählt wird, desto geringer sind die Eintreibkräfte, aber auch die Auszugskräfte. Je steiler der Winkel gewählt ist, desto schwerer weicht der Untergrund beim Setzen zur Seite. Bei zu steilen Winkeln kann es auch zu einer Zerstörung von Untergrundmaterial (insbesondere Holzfasern) kommen, was sich nachteilig auf die Haltekräfte auswirkt. Es hat sich gezeigt, dass in dem genannten Winkelbereich ein vorteilhafter und wirksamer Ausgleich zwischen den genannten Effekten zu verzeichnen ist.

Gemäß einem exemplarischen Ausführungsbeispiel kann das Befestigungselement aus einem Material mit einer Festigkeit von mindestens 600 N/mm², insbesondere von mindestens 800 N/mm², ausgebildet sein. Ein geeignetes Material für das Befestigungselement ist Stahl. Eine Festigkeit von ungefähr 600 N/mm² ist geeignet für viele Hölzer, wohingegen ausgeprägte Harthölzer (wie Eiche oder Buche) eine Festigkeit von mindestens 800 N/mm² bedingen können.

Gemäß einem exemplarischen Ausführungsbeispiel kann das Befestigungselement als in axialer Richtung in den Untergrund (insbesondere Holzuntergrund) einzutreibender Nagel ausgebildet sein. Bei einer Ausgestaltung des Befestigungselements als Nagel, der mit einem Hammer eingeschlagen oder mit einem Setzgerät eingeschossen wird, ist eine einfache Setzprozedur ermöglicht. Diese kann zudem mit geringem Zeitaufwand und durch nur einen Monteur bewerkstelligt werden. Der Setzvorgang erfolgt dann im Wesentlichen oder vollständig ohne Drehung des Nagels während des Setzens.

Gemäß einem exemplarischen Ausführungsbeispiel kann ein Öffnungswinkel der Endspitze in einem Bereich zwischen 30° und 75° liegen. Es hat sich gezeigt, dass Öffnungswinkel in dem genannten Wertebereich ein wirksames Eindringen des Befestigungselements in einen Untergrund, insbesondere vorbohrungsfrei, ermöglichen. Dies funktioniert auch bei Vollholz.

Gemäß einem exemplarischen Ausführungsbeispiel kann das Befestigungselement zum, insbesondere vorbohrungsfreien, Einbringen in einen Holzuntergrund, insbesondere in einen massiven Holzuntergrund, ausgebildet sein. Ein solches vorbohrungsfreies Einbringen eines Befestigungselements in den Untergrund erlaubt eine schnelle und einfache Montage. Dies gilt für verschiedenste Holzuntergründe, wie zum Beispiel Eiche, Buche oder Ahorn.

Gemäß einem exemplarischen Ausführungsbeispiel kann das Befestigungselement ferner einen an den Schaftabschnitt rückseitig direkt oder indirekt angeschlossenen Kopfabschnitt mit einem gegenüber dem gesamten Schaftabschnitt größeren Außendurchmesser aufweisen. Ein solcher Kopfabschnitt mit seiner radialen Aufweitung dient dazu, nach Beendigung des Setzvorgangs außerhalb des Holzuntergrunds zu verbleiben und zum Beispiel ein Profil (zum Beispiel einen Balkenschuh), durch welches das Befestigungselement in den Holzuntergrund eingeführt worden ist, gegen den Holzuntergrund zu drücken.

Gemäß einem exemplarischen Ausführungsbeispiel ausserhalb des beanspruchten Schutzumfangs kann der Kopfabschnitt optional mit einem Antrieb zum Drehantreiben des als Schraube ausgebildeten Befestigungselements versehen sein, wobei der Antrieb insbesondere als Längsschlitz, als Kreuzschlitz, als Imbus, als TORX-Antrieb oder als AW-Antrieb ausgebildet sein kann. Ein solcher Antrieb kann optional in den Kopfabschnitt eingebracht werden, insbesondere wenn die Verankerungsstrukturen zumindest teilweise schraubenförmig ausgebildet sind. Alternativ, wenn das Befestigungselement als reiner Nagel mit axialem Setzvorgang ohne Drehbewegung des Nagels ausgebildet und betrieben wird, kann die Stirnfläche des Kopfabschnitts von einem solchen Antrieb frei sein.

Im Folgenden werden exemplarische Ausführungsbeispiele der vorliegenden Erfindung mit Verweis auf die folgenden Figuren detailliert beschrieben.
Figur 1 zeigt ein Befestigungselement gemäß einem exemplarischen Ausführungsbeispiel der Erfindung.
Figur 2 zeigt eine Anordnung gemäß einem exemplarischen Ausführungsbeispiel der Erfindung.
Figur 3 zeigt ein Befestigungselement gemäß einem anderen exemplarischen Ausführungsbeispiel der Erfindung.

Gleiche oder ähnliche Komponenten in unterschiedlichen Figuren sind mit gleichen Bezugsziffern versehen.

**Figur 1** zeigt ein Befestigungselement 100 gemäß einem exemplarischen Ausführungsbeispiel der Erfindung.

Das in Figur 1 gezeigte Befestigungselement 100 ist als Nagel zum im Wesentlichen oder sogar vollständig drehfreien, mithin im Wesentlichen oder sogar vollständig rein axialen, Einbringen in einen Untergrund in Form eines vorbohrungfreien Massivholzuntergrunds ausgebildet. Der Nagel ist mittels eines nicht gezeigten Werkzeugs (zum Beispiel ein Hammer oder ein Bolzensetzgerät) unter Aufbringung einer im Wesentlichen oder sogar vollständig rein axialen Setzkraft in den Untergrund einbringbar (zum Beispiel einschlagbar oder einschießbar). Das aus Stahl gefertigte Befestigungselement 100 weist einen sich axial erstreckenden, im Wesentlichen kreiszylindrischen Schaftabschnitt 102 auf. Untergrundseitig bzw. nagelvorderseitig schließt sich an den Schaftabschnitt 102 eine ballistisch geformte, zum Beispiel ogivale Endspitze 104 an. Ein Öffnungswinkel β der Endspitze 104 liegt vorzugsweise in einem Bereich zwischen 30° und 75°, insbesondere im Bereich von 60°, um ein besonders kraftarmes Eindringen des Befestigungselements 100 in den vorbohrungsfreien Holzuntergrund zu fördern.

Werkzeugseitig bzw. nagelrückseitig schließt sich an den Schaftabschnitt 102 ein Kopfabschnitt 114 mit einem gegenüber dem gesamten Schaftabschnitt 102 größeren Außendurchmesser an. Zum Beispiel kann ein nicht gezeigter Hammer auf die endseitige Stirnfläche des Kopfabschnitts 114 treffen, um das Befestigungselement 100 in den Untergrund einzubringen. Wenn das gemäß Figur 1 als Nagel ausgebildete Befestigungselement 100 im Wesentlichen drehungsfrei in den vorbohrungsfreien Untergrund eingebracht wird, ist das Vorsehen eines Antriebs in einer Stirnfläche des Kopfabschnitts 114 entbehrlich. Die Stirnfläche des Kopfabschnitts 114 kann daher planar ausgebildet sein.

Ferner sind an einer umfänglichen Außenfläche des Schaftabschnitts 102 mehrere (in dem gezeigten Ausführungsbeispiel drei) Gruppen 106, 108, 110 von Verankerungsstrukturen 112 vorgesehen bzw. angeformt, wobei sich jede der Verankerungsstrukturen 112 hin zu der Endspitze 104 verjüngt. Ein jeweils äußerster Durchmesser für unterschiedliche der Gruppen 106, 108, 110 von Verankerungsstrukturen 112 ist unterschiedlich. Dieser gruppenbezogene äußerste Durchmesser der Verankerungsstrukturen 112 (3,8 mm für Gruppe 106, 4,2 mm für Gruppe 108, 4,5 mm für Gruppe 110) nimmt von der Endspitze 104 hin zum Kopfabschnitt 114 kontinuierlich zu, sodass ein abgestufter Nagel geschaffen ist. Mit dem "äußersten Durchmesser einer jeweiligen Gruppe 106, 108, 110 von Verankerungsstrukturen 112" ist insbesondere die größte Spannweite senkrecht zu einer Axialerstreckungsrichtung 150 gemeint, welche irgendein Strukturmerkmal aufweist, das der jeweiligen Gruppe 106, 108, 110 zugeordnet ist.

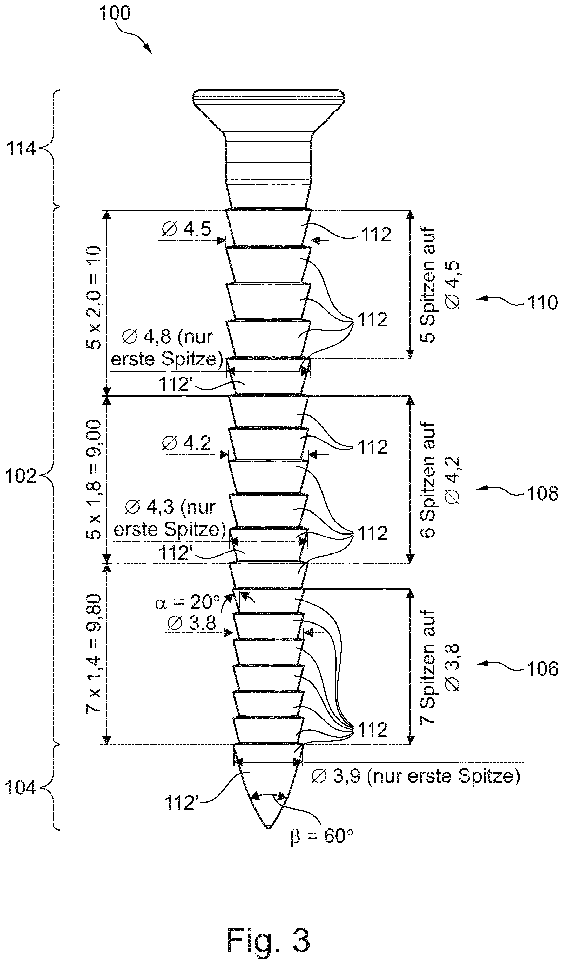

Die zu einer jeweiligen Gruppe 106, 108, 110 gehörigen Verankerungsstrukturen 112 können insbesondere dadurch definiert werden, dass, wie in Figur 1 gezeigt, alle Verankerungsstrukturen 112 einer jeweiligen Gruppe 106, 108, 110 denselben Außendurchmesser haben können (oder dass, wie in Figur 3 gezeigt, alle Verankerungsstrukturen 112, 112' einer jeweiligen Gruppe 106, 108, 110 innerhalb eines der jeweiligen Gruppe 106, 108, 110 zugeordneten Bereichs von Außendurchmessern liegen, wobei die Verankerungsstrukturen 112, 112' einer jeweiligen anderen Gruppe 106, 108, 110 außerhalb der Bereiche von Außendurchmessern der jeweils anderen Gruppen 106, 108, 110 liegen).

Vorzugsweise ist der äußerste Durchmesser einer jeweiligen, der Endspitze 104 näheren Gruppe 106, 108, 110 um größenordnungsmäßig ungefähr 10 % kleiner als der äußerste Durchmesser einer zu dieser Gruppe 106, 108, 110 benachbarten Gruppe 106, 108, 110, die der Endspitze 104 jeweils ferner ist als die zuerst genannte Gruppe 106, 108, 110. Für das Ausführungsbeispiel gemäß Figur 1 liegen die gruppenbezogenen äußersten Durchmesser bei 3,8 mm für Gruppe 106, 4,2 mm für Gruppe 108 bzw. 4,5 mm für Gruppe 110. Jede der Mehrzahl von Verankerungsstrukturen 112 einer jeweiligen Gruppe 106, 108, 110 hat gemäß Figur 1 einen auf diese Gruppe 106, 108, 110 bezogenen identischen Außendurchmesser.

Gemäß Figur 1 sind die Verankerungsstrukturen 112 als geschlossene, Ringstrukturen ausgebildet, die aufgrund ihres konischen Zulaufens hin zur Endspitze 104 kegelstumpfförmige Strukturen bilden. Das Befestigungselement 100 gemäß Figur 1 ist ein rotationssymmetrischer Körper.

Die der Endspitze 104 nächstgelegene Gruppe 106 hat mit sieben Verankerungsstrukturen 112 eine größere Anzahl von Verankerungsstrukturen 112 als die nachfolgende Gruppe 108 mit sechs Verankerungsstrukturen 112. Diese mittlere Gruppe 108 hat mit ihren sechs Verankerungsstrukturen 112 wiederum eine größere Anzahl von Verankerungsstrukturen 112 als die dem Kopfabschnitt 114 nächstgelegene Gruppe 110 mit ihren fünf Verankerungsstrukturen 112.

Die Verankerungsstrukturen 112 haben gemäß Figur 1 einen konstanten Flankenwinkel α von ungefähr 20° zwischen der Axialerstreckungsrichtung 150 des Schaftabschnitts 102 und der sich verjüngenden Außenseite.

Wie bereits erwähnt, hat in dem gezeigten Ausführungsbeispiel das als Nagel ausgebildete Befestigungselement 100 zwischen der Schraubenspitze 104 und dem Kopfabschnitt 114 drei Gruppen 106, 108, 110 von Verankerungsstrukturen 112. Diese sind alle parallel zueinander entlang einer durch die Schwerpunkte der Verankerungsstrukturen 112 führenden Gerade entsprechend der Axialerstreckungsrichtung 150 des Schaftabschnitts 102 als vollumfängliche und geschlossene kegelstumpfförmige Ringstrukturen mit dazwischen gebildeten Hinterschnitten ausgebildet. Zwischen zwei jeweils benachbarten Ringstrukturen ist also ein Hohlraum geformt, der beim unerwünschten Ausziehen des Befestigungselements 100 aus dem Untergrund als Widerhaken dient, da in diesem Raum Material des Untergrunds, insbesondere Holzspäne, aufgenommen werden kann. Dies erleichtert das Management bei der Abfuhr der Holzspäne und sorgt durch eine weitgehend zerstörungsfreie Kompaktierung der Holzspäne in diesen Hohlräumen für eine weitere Erhöhung der Auszugskraft. Das als gestufter Nagel ausgebildete Befestigungselement 100 hat die radial sich am weitesten nach außen erstreckenden Verankerungsstrukturen 112 in der Gruppe 110, die sich direkt an den Kopfabschnitt 114 anschließt. Die radial sich am wenigsten weit nach außen erstreckenden Verankerungsstrukturen 112 sind bei der vordersten Gruppe 106 zu finden. In der dazwischen angeordneten Gruppe 108 ist die Radialausdehnung der Verankerungsstrukturen 112 größer als in der Gruppe 106, aber kleiner als in der Gruppe 110. Die vorderste Gruppe 106 weist sieben Verankerungsstrukturen 112 auf, die mittlere Gruppe 106 weist sechs Verankerungsstrukturen 112 auf und die hinterste Gruppe 110 weist fünf Verankerungsstrukturen 112 auf.

Zum Setzen wird der in Figur 1 gezeigte Nagel eingeschlagen, eingehämmert oder eingeschossen. Das Befestigungselement 100 kann eine Festigkeit von mindestens 600 N/mm² aufweisen. Die Festigkeit kann als jene mechanische Spannung bezeichnet werden, die sich aus der maximal erreichten Kraft bei einer definierten Dehnung oder bei einem definierten Fließverhalten ergibt, jeweils bezogen auf die ursprüngliche (das heißt unbeanspruchte und unverformte) Querschnittsfläche des Werkstoffes. Zum Schießen in massives Hartholz, wie zum Beispiel Buche oder Eiche, kann eine Festigkeit von mindestens 800 N/mm² vorteilhaft sein. Besonders vorteilhaft an dem gezeigten Ausführungsbeispiel ist, dass aufgrund der beschriebenen Ausgestaltung des Befestigungselements 100 im Vergleich zu einem herkömmlichen Nagel die gleiche Haltekraft mit einem kürzeren Befestigungselement 100 erreicht werden kann. Umgekehrt kann bei einem gleich langen Befestigungselement 100 eine höhere Haltekraft erreicht werden.

Ein schematisches Detail in Figur 1 (mit aus Gründen der Klarheit übertriebenen Proportionen) zeigt, dass eine Einhüllende 180 der Verankerungsstrukturen 112 der Gruppen 106, 108, 110 einer Anordnung axial aneinandergereihter konzentrischer Kreiszylinder 182, 184, 186 mit hin zur Endspitze 104 stufenweise abnehmenden Zylinderradien entspricht.

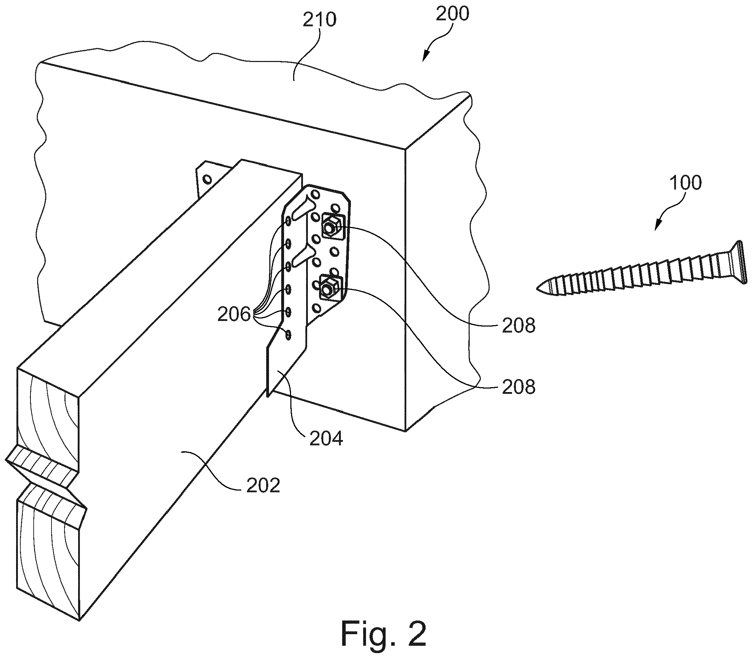

**Figur 2** zeigt eine Anordnung 200 gemäß einem exemplarischen Ausführungsbeispiel der Erfindung.

Die Anordnung 200 dient zum Verbinden eines als Holzbalken ausgebildeten Holzuntergrunds 202 mit einem als Balkenschuh ausgebildeten Profil 204 und weist neben dem Profil 204 mindestens ein Befestigungselement 100 gemäß Figur 1 (oder gemäß Figur 3) auf. Das Befestigungselement 100 und das Profil 204 sind derart ausgebildet, dass das Befestigungselement 100 unter Ausbildung einer Verbindung zwischen dem Holzuntergrund 202 und dem Profil 204 durch Durchgangslöcher 206 in dem metallischen Profil 204 hindurch in den Holzuntergrund 202 einbringbar ist.

In Figur 2 ist gezeigt, dass das als Nagel ausgebildete Befestigungselement 100 durch das als Balkenschuh ausgebildete Profil 204 hinein in den Holzbalken als Holzuntergrund 202 gesetzt wird. Dies erfolgt durch Einschlagen, Einhämmern oder Einschießen ohne Drehbewegung des Befestigungselements 100 während des Setzens. Aufgrund der guten hohen Auszugskräfte des Befestigungselements 100 und der vorbohrungsfreien Möglichkeit des Setzens des Befestigungselements 100 kann eine einfache Montage mit einer zuverlässigen Befestigung von Profil 204 und Holzbalken 202 kombiniert werden. Damit können entweder weniger Befestigungselemente 100 bzw. kürzere Befestigungselemente 100 verwendet werden, um dieselbe Haltekraft zu erreichen. Alternativ kann eine höhere Haltekraft erreicht werden, wenn gleich lange und gleich viele Befestigungselemente 100 gesetzt werden.

Wie in Figur 2 ebenfalls angedeutet ist, kann das Profil 204 mit daran montiertem Holzuntergrund 202 zum Beispiel unter Verwendung von Schrauben 208 an einem Verbindungskörper 210, Beispiel einer Beton- oder Holzwand, befestigt werden

**Figur 3** zeigt ein Befestigungselement 100 gemäß einem anderen exemplarischen Ausführungsbeispiel der Erfindung.

Das Ausführungsbeispiel gemäß Figur 3 unterscheidet sich von dem Ausführungsbeispiel gemäß Figur 1 insbesondere dadurch, dass die zu einer jeweiligen Gruppe 106, 108, 110 gehörigen Verankerungsstrukturen 112, 112' gemäß Figur 3 dadurch definiert werden können, dass alle Verankerungsstrukturen 112, 112' einer jeweiligen Gruppe 106, 108, 110 - mit Ausnahme der jeweils vordersten Verankerungsstruktur 112' einer jeweiligen Gruppe 106, 108, 110 - denselben Außendurchmesser haben können. Gemäß Figur 3 hat die jeweils vorderste Verankerungsstruktur 112' einer jeweiligen Gruppe 106, 108, 110 mit einem Durchmesser von 3,9 mm für Gruppe 106, mit einem Durchmesser von 4,3 mm für Gruppe 108 bzw. mit einem Durchmesser von 4,8 mm für Gruppe 110 einen jeweils etwas größeren Wert als die untereinander identischen Außendurchmesser der jeweils restlichen Verankerungsstrukturen 112 einer jeweiligen Gruppe 106, 108, 110 (der zuletzt genannte Durchmesser beträgt für die restlichen Verankerungsstrukturen 112 der Gruppe 106 3,8 mm, der Gruppe 108 4,2 mm und der Gruppe 110 4,5 mm). Vorzugsweise ist der äußerste Durchmesser einer jeweiligen, der Endspitze 104 näheren Gruppe 106, 108, 110 um größenordnungsmäßig ungefähr 10 % kleiner als der äußerste Durchmesser einer der Endspitze 104 jeweils ferneren, benachbarten Gruppe 106, 108, 110. Eine der Endspitze 104 naheste Verankerungsstruktur 112' einer jeweiligen Gruppe 106, 108, 110 hat einen um einige Prozent größeren äußersten Durchmesser als die jeweils restlichen Verankerungsstrukturen 112 der jeweiligen Gruppe 106, 108, 110. Jede der Mehrzahl restlicher Verankerungsstrukturen 112 einer jeweiligen Gruppe 106, 108, 110 (d.h. die von der gruppenbezogen vordersten Verankerungsstruktur 112' mit dem gruppenbezogen größten Außendurchmesser unterschiedlichen weiteren Verankerungsstrukturen 112 der jeweiligen Gruppe 106, 108, 110) hat einen auf diese Gruppe 106, 108, 110 bezogenen identischen größten Außendurchmesser. Ein Außendurchmesser der vordersten Verankerungsstruktur 112' der Gruppe 106 hat einen Außendurchmesser von 3,9 mm, wohingegen alle anderen Verankerungsstrukturen 112 der vordersten Gruppe 106 einen Außendurchmesser von 3,8 mm aufweisen. Die vorderste Verankerungsstruktur 112' der mittleren Gruppe 108 weist einen Außendurchmesser von 4,3 mm auf, wohingegen alle anderen Verankerungsstrukturen 112 der mittleren Gruppe 108 einen Außendurchmesser von 4,2 mm aufweisen. Die vorderste Verankerungsstruktur 112' der dritten Gruppe 110 weist einen Außendurchmesser von 4,8 mm auf, wohingegen alle anderen Verankerungsstrukturen 112 der vordersten Gruppe 110 einen Außendurchmesser von 4,5 mm aufweisen.

Gemäß Figur 3 sinkt von der Endspitze 104 hin zu dem Kopfabschnitt 114 die Anzahl von Verankerungsstrukturen 112 pro Gruppe 106, 108, 110, steigt der Außendurchmesser der jeweils vordersten Verankerungsstruktur 112' einer jeweiligen Gruppe 106, 108, 110 und steigt der gruppenbezogen konstante Außendurchmesser der jeweils nachfolgenden Verankerungsstrukturen 112 einer jeweiligen Gruppe 106, 108, 110.

**Tabelle 1** dokumentiert Messergebnisse an einem Befestigungselement 100 (in Form eines geschliffenen Stufennagels) gemäß einem exemplarischen Ausführungsbeispiel der Erfindung im Vergleich zu einem herkömmlichen Nagel (in Form eines herkömmlichen Kammnagels) und zeigt, dass mit solchen Befestigungselementen 100 bei gleicher Länge höhere Auszugskräfte erreicht werden können als herkömmlich. Diese Messergebnisse beziehen sich auf Auszugstests in Buchenholz.

**Tabelle 1**

| | Herkömmlicher Kammnagel | Stufennagel gemäß Ausführungsbeispiel der Erfindung |
|---|---|---|
| Auszugstest 1 | 3,34 kN | 4,34 kN |
| Auszugstest 2 | 3,21 kN | 4,06 kN |
| Auszugstest 3 | 3,05 kN | 4,16 kN |
| Mittelwert | 3,2 kN | 4,2 kN |

Tabelle 1 ist zu entnehmen, dass bei dem Befestigungselement 100 gegenüber dem herkömmlichen Kammnagel eine Steigerung der Auszugskraft von über 30 % festzustellen war.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Befestigungselement (100) zum Einbringen in einen Untergrund (202), wobei das Befestigungselement (100) aufweist:
einen sich axial erstreckenden Schaftabschnitt (102);
eine sich an den Schaftabschnitt (102) anschließende Endspitze (104);
eine Mehrzahl von Gruppen (106, 108, 110) von Verankerungsstrukturen (112) an dem Schaftabschnitt (102), die sich hin zu der Endspitze (104) verjüngen;
wobei ein äußerster Durchmesser für unterschiedliche der Gruppen (106, 108, 110) von Verankerungsstrukturen (112) unterschiedlich ist,
wobei der äußerste Durchmesser einer jeweiligen Gruppe (106, 108, 110), die der Endspitze (104) näher ist als eine zu dieser Gruppe (106, 108, 110) benachbarte jeweilige andere Gruppe (106, 108, 110), kleiner ist als der äußerste Durchmesser der benachbarten, jeweiligen anderen Gruppe (106, 108, 110),
wobei die Verankerungsstrukturen (112) als Ringstruktur mittels in sich geschlossener Ringe ohne durchgehende Verbindung zu benachbarten anderen Ringen ausgebildet sind,
wobei eine der Endspitze (104) naheste Verankerungsstruktur (112') einer jeweiligen Gruppe (106, 108, 110) einen größeren äußersten Durchmesser hat als eine Mehrzahl restlicher Verankerungsstrukturen (112) einer jeweiligen Gruppe (106, 108, 110) und jede der Mehrzahl restlicher Verankerungsstrukturen (112) einer jeweiligen Gruppe (106, 108, 110) einen identischen größten eigenen Außendurchmesser aufweist oder alle Verankerungsstrukturen (112) einer jeweiligen Gruppe (106, 108, 110) denselben Außendurchmesser haben.

2. Befestigungselement (100) gemäß Anspruch 1, wobei der äußerste Durchmesser einer jeweiligen Gruppe (106, 108, 110), die der Endspitze (104) näher ist als eine zu dieser Gruppe (106, 108, 110) benachbarte jeweilige andere Gruppe (106, 108, 110) um 5 % bis 15 % kleiner ist als der äußerste Durchmesser der benachbarten, jeweiligen anderen Gruppe (106, 108, 110).

3. Befestigungselement (100) gemäß Anspruch 1 oder 2, wobei eine der Endspitze (104) naheste Verankerungsstruktur (112') einer jeweiligen Gruppe (106, 108, 110) einen um 2 % bis 10 % größeren äußersten Durchmesser hat als die Mehrzahl restlicher Verankerungsstrukturen (112) der jeweiligen Gruppe (106, 108, 110).

4. Befestigungselement (100) gemäß einem der Ansprüche 1 bis 3, wobei zumindest ein Teil der Verankerungsstrukturen (112) als kegelstumpfförmige Ringstruktur ausgebildet ist.

5. Befestigungselement (100) gemäß einem der Ansprüche 1 bis 4, wobei zwischen jeweils benachbarten Ringstrukturen ringförmige Hinterschnitte, insbesondere umfänglich geschlossene ringförmige Hinterschnitte, ausgebildet sind.

6. Befestigungselement (100) gemäß einem der Ansprüche 1 bis 5, aufweisend zumindest eines der folgenden Merkmale:
wobei sich zumindest ein Teil der Verankerungsstrukturen (112) hin zu der Endspitze (104) konisch verjüngt,
wobei mindestens drei Gruppen (106, 108, 110) vorgesehen sind,
wobei jede der Gruppen (106, 108, 110) zwischen 3 und 10 Verankerungsstrukturen (112) aufweist, insbesondere zwischen 4 und 8 Verankerungsstrukturen (112) aufweist,
wobei eine der Endspitze (104) nähere Gruppe (106, 108, 110) eine größere Anzahl von Verankerungsstrukturen (112) aufweist als eine der Endspitze (104) fernere Gruppe (106, 108, 110),
wobei die Verankerungsstrukturen (112) einer der Endspitze (104) näheren Gruppe (106, 108, 110) eine jeweils kürzere Axialerstreckung haben als die Verankerungsstrukturen (112) einer der Endspitze (104) ferneren Gruppe (106, 108, 110),
wobei eine Einhüllende (180) der Verankerungsstrukturen (112) der Gruppen (106, 108, 110) einer Anordnung axial aneinandergereihter konzentrischer Kreiszylinder (182, 184, 186) mit hin zur Endspitze (104) stufenweise abnehmenden Zylinderradien entspricht,
wobei sich ein äußerster Durchmesser der Verankerungsstrukturen (112) mit zunehmendem Abstand von der Endspitze (104) in kontinuierlicher Weise stufenweise erhöht.

7. Befestigungselement (100) gemäß einem der Ansprüche 1 bis 6, aufweisend zumindest eines der folgenden Merkmale:
wobei zumindest ein Teil der Verankerungsstrukturen (112) einen Flankenwinkel (α) zwischen einer Axialerstreckungsrichtung (150) des Schaftabschnitts (102) und einer sich verjüngenden Außenfläche der jeweiligen Verankerungsstruktur (112) in einem Bereich zwischen 10° und 30° aufweist,
wobei ein Öffnungswinkel (β) der Endspitze (104) in einem Bereich zwischen 30° und 75° liegt.

8. Befestigungselement (100) gemäß einem der Ansprüche 1 bis 7, aufweisend zumindest eines der folgenden Merkmale:
wobei das Befestigungselement (100) ausgebildet ist als in Axialerstreckungsrichtung (150) des Befestigungselements (100) in den Untergrund (202) einzutreibender Nagel,
wobei das Befestigungselement (100) ausgebildet ist zum, insbesondere vorbohrungsfreien, Einbringen in einen Holzuntergrund (202), insbesondere in einen massiven Holzuntergrund (202), weiter insbesondere in einen massiven Hartholzuntergrund (202).

9. Befestigungselement (100) gemäß einem der Ansprüche 1 bis 8, ferner aufweisend einen an den Schaftabschnitt (102) rückseitig direkt oder indirekt angeschlossenen Kopfabschnitt (114) mit einem gegenüber dem Schaftabschnitt (102) größeren Außendurchmesser.

10. Anordnung (200) zum Verbinden eines Holzuntergrunds (202) mit einem Profil (204), wobei die Anordnung (200) aufweist:
mindestens ein Befestigungselement (100) gemäß einem der Ansprüche 1 bis 9;
das Profil (204), insbesondere ein Balkenschuh zum Aufnehmen eines Endabschnitts des Holzuntergrunds (202);
wobei das mindestens eine Befestigungselement (100) und das Profil (204) derart ausgebildet sind, dass das mindestens eine Befestigungselement (100) unter Ausbildung einer Verbindung zwischen dem Holzuntergrund (202) und dem Profil (204) durch das Profil (204) hindurch in den Holzuntergrund (202) einbringbar ist.

11. Verfahren zum Herstellen eines Befestigungselements (100) zum Einbringen in einen Untergrund (202), wobei das Verfahren aufweist:
Ausbilden einen sich axial erstreckenden Schaftabschnitts (102);
Ausbilden einer sich an den Schaftabschnitt (102) anschließenden Endspitze (104);
Ausbilden einer Mehrzahl von Gruppen (106, 108, 110) von Verankerungsstrukturen (112) an dem Schaftabschnitt (102), die sich hin zu der Endspitze (104) verjüngen derart, dass ein äußerster Durchmesser für unterschiedliche der Gruppen (106, 108, 110) von Verankerungsstrukturen (112) unterschiedlich ist,
wobei der äußerste Durchmesser einer jeweiligen Gruppe (106, 108, 110), die der Endspitze (104) näher ist als eine zu dieser Gruppe (106, 108, 110) benachbarte jeweilige andere Gruppe (106, 108, 110), kleiner ist als der äußerste Durchmesser der benachbarten, jeweiligen anderen Gruppe (106, 108, 110),
wobei die Verankerungsstrukturen (112) als Ringstruktur mittels in sich geschlossener Ringe ohne durchgehende Verbindung zu benachbarten anderen Ringen ausgebildet sind,
wobei eine der Endspitze (104) naheste Verankerungsstruktur (112') einer jeweiligen Gruppe (106, 108, 110) einen größeren äußersten Durchmesser hat als eine Mehrzahl restlicher Verankerungsstrukturen (112) einer jeweiligen Gruppe (106, 108, 110) und jede der Mehrzahl restlicher Verankerungsstrukturen (112) einer jeweiligen Gruppe (106, 108, 110) einen identischen größten eigenen Außendurchmesser aufweist oder alle Verankerungsstrukturen (112) einer jeweiligen Gruppe (106, 108, 110) denselben Außendurchmesser haben.

12. Verfahren zum Einbringen eines Befestigungselements (100) gemäß einem der Ansprüche 1 bis 9 in einen Untergrund (202), wobei das Befestigungselement (100) in den Untergrund (202) eingeschossen, eingeschlagen oder eingedreht wird.

13. Verwendung eines Befestigungselements (100) gemäß einem der Ansprüche 1 bis 9 zum insbesondere vorbohrungsfreien Einbringen in einen Holzuntergrund (202), insbesondere in einen Massivholzuntergrund, zum Verbinden des Holzuntergrunds (202) mit einem Profil (204), insbesondere mit einem Balkenschuh.

## Claims

1. A fastening element (100) for insertion into a substrate (202), wherein the fastening element (100) has:
an axially extending shank section (102);
an end tip (104) adjoining the shank section (102);
a plurality of groups (106, 108, 110) of anchoring structures (112) on the shank section (102), which taper towards the end tip (104);
wherein an outermost diameter differs for the different groups (106, 108, 110) of anchoring structures (112),
wherein the outermost diameter of a particular group (106, 108, 110), which is closer to the end tip (104) than another particular group (106, 108, 110) that is adjacent to the said group (106, 108, 110), is smaller than the outermost diameter of the other adjacent particular group (106, 108, 110),
wherein the anchoring structures (112) are formed as a ring structure by means of intrinsically closed rings with no continuous connection to other adjacent rings,
wherein one of the anchoring structures (112') of a particular group (106, 108, 110) closest to the end tip (104) has a larger outermost diameter than a plurality of other anchoring structures (112) of a particular group (106, 108, 110), and each of the plurality of other anchoring structures (112) of a particular group (106, 108, 110) has an identical own largest outer diameter, or all anchoring structures (112) of a particular group (106, 108, 110) have the same outer diameter.

2. The fastening element (100) in accordance with claim 1, wherein the outermost diameter of a particular group (106, 108, 110), which is closer to the end tip (104) than another particular group (106, 108, 110) adjacent to the said group (106, 108, 110), is 5% to 15% smaller than the outermost diameter of the other adjacent particular group (106, 108, 110).

3. The fastening element (100) in accordance with claim 1 or 2, wherein an anchoring structure (112') of a particular group (106, 108, 110), which is closest to the end tip (104), has an outermost diameter that is larger by 2% to 10% than that of the plurality of other anchoring structures (112) of the particular group (106, 108, 110).

4. The fastening element (100) in accordance with one of the claims 1 to 3, wherein at least part of the anchoring structures (112) is formed as a truncated conically shaped ring structure.

5. The fastening element (100) in accordance with one of the claims 1 to 4, wherein annular undercuts, in particular circumferentially closed annular undercuts, are formed between adjacent ring structures.

6. The fastening element (100) in accordance with one of the claims 1 to 5, having at least one of the following features:
wherein at least part of the anchoring structures (112) tapers conically towards the end tip (104),
wherein at least three groups (106, 108, 110) are provided,
wherein each of the groups (106, 108, 110) has between 3 and 10 anchoring structures (112), in particular has between 4 and 8 anchoring structures (112),
wherein a group (106, 108, 110) that is closer to the end tip (104) has a greater number of anchoring structures (112) than a group (106, 108, 110) that is further from the end tip (104),
wherein the anchoring structures (112) of a group (106, 108, 110) that is closer to the end tip (104) each have a shorter axial extent than the anchoring structures (112) of a group (106, 108, 110) that is further from the end tip (104),
wherein an envelope (180) of the anchoring structures (112) of the groups (106, 108, 110) corresponds to an arrangement of axially aligned concentric circular cylinders (182, 184, 186), with cylinder radii decreasing in a stepwise manner towards the end tip (104),
wherein an outermost diameter of the anchoring structures (112) increases continuously in a stepwise manner with increasing distance from the end tip (104).

7. The fastening element (100) in accordance with one of the claims 1 to 6,
having at least one of the following features:
wherein at least part of the anchoring structures (112) has a flank angle (α) between a direction of axial extent (150) of the shank section (102) and a tapering outer surface of the particular anchoring structure (112) in a range between 10° and 30°,
wherein an opening angle (β) of the end tip (104) is in a range between 30° and 75°.

8. The fastening element (100) in accordance with one of the claims 1 to 7, having at least one of the following features:
wherein the fastening element (100) is formed as a nail to be driven into the substrate (202) in the direction of axial extent (150) of the fastening element (100),
wherein the fastening element (100) is designed for insertion, in particular without pre-drilling, into a wood substrate (202), in particular into a solid wood substrate (202), furthermore in particular into a solid hardwood substrate (202).

9. The fastening element (100) in accordance with one of the claims 1 to 8, furthermore having a head section (114), directly or indirectly connected on its rear face to the shank section (102), and having an outer diameter larger than that of the shank section (102).

10. An arrangement (200) for purposes of joining a wood substrate (202) to a profile (204), wherein the arrangement (200) has:
at least one fastening element (100) in accordance with one of the claims 1 to 9,
the profile (204), in particular a joist hanger, for receiving an end section of the wood substrate (202);
wherein the at least one fastening element (100) and the profile (204) are configured such that the at least one fastening element (100) can be inserted through the profile (204) into the wood substrate (202) to form a joint between the wood substrate (202) and the profile (204).

11. A method for the manufacture of a fastening element (100) for insertion into a substrate (202), wherein the method has:
formation of an axial extending shank section (102);
formation of an end tip (104) adjoining the shank section (102);
formation of a plurality of groups (106, 108, 110) of anchoring structures (112) on the shank section (102), which taper towards the end tip (104) such that an outermost diameter differs for the various groups (106, 108, 110) of anchoring structures (112),
wherein the outermost diameter of a particular group (106, 108, 110), which is closer to the end tip (104) than another particular group (106, 108, 110) adjacent to the said group (106, 108, 110), is smaller than the outermost diameter of the other particular adjacent group (106, 108, 110),
wherein the anchoring structures (112) are formed as a ring structure by means of intrinsically closed rings with no continuous connection to other adjacent rings,
wherein an anchoring structure (112') of a particular group (106, 108, 110) closest to the end tip (104) has a larger outermost diameter than a plurality of other anchoring structures (112) of a particular group (106, 108, 110), and each of the plurality of other anchoring structures (112) of a particular group (106, 108, 110) has an identical own largest outer diameter, or all anchoring structures (112) of a particular group (106, 108, 110) have the same outer diameter.

12. A method for inserting a fastener (100) in accordance with one of the claims 1 to 9 into a substrate (202), wherein the fastening element (100) is shot, driven, or turned, into the substrate (202).

13. A use of a fastening element (100) in accordance with one of the claims 1 to 9 for insertion, in particular without pre-drilling, into a wood substrate (202), in particular into a solid wood substrate, for purposes of joining the wood substrate (202) to a profile (204), in particular to a joist hanger.

## Revendications

1. Élément de fixation (100, destiné à être introduit dans un support (202), l'élément de fixation (100) comportant :
un tronçon de tige (102), s'étendant dans la direction axiale ;
une pointe d'extrémité (104) se raccordant sur le tronçon de tige (102) ;
une pluralité de groupes (106, 108, 110) de structures d'ancrage (112) sur le tronçon de tige (102), qui se rétrécissent en direction de la pointe d'extrémité (104) ;
un diamètre extérieur extrême étant différent pour les différents groupes (106, 108, 110) de structures d'ancrage (112),
le diamètre extérieur extrême d'un groupe (106, 108, 110) respectif qui est plus proche de la pointe d'extrémité (104) qu'un autre groupe (106, 108, 110) respectif, voisin dudit groupe (106, 108, 110) étant inférieur au diamètre extérieur extrême de l'autre groupe (106, 108, 110) voisin respectif,
les structures d'ancrage (112) étant conçues sous la forme de structure annulaire à l'aide d'anneaux fermés sur soi, sans assemblage continu sur d'autres anneaux,
une structure d'ancrage (112') la plus proche de la pointe d'extrémité (104) d'un groupe (106, 108, 110) respectif présentant un diamètre extérieur extrême supérieur à celui d'une pluralité de structures d'ancrage (112) restantes d'un groupe (106, 108, 110) concerné et chacune des pluralités de structures d'ancrage (112) restantes d'un groupe (106, 108, 110) respectif présentant un propre diamètre extérieur le plus grand identique ou toutes les structures d'ancrage (112) d'un groupe (106, 108, 110) respectif présentant le même diamètre extérieur.

2. Élément de fixation (100) selon la revendication 1, le diamètre extérieur extrême d'un groupe (106, 108, 110) respectif qui est plus proche de la pointe d'extrémité (104) qu'un autre groupe (106, 108, 110) respectif voisin dudit groupe (106, 108, 110) étant inférieur de 5 % à 15 % au diamètre extérieur extrême de l'autre groupe (106, 108, 110) voisin respectif.

3. Élément de fixation (100) selon la revendication 1 ou 2, une structure d'ancrage (11 2') la plus proche de la pointe d'extrémité (104) d'un groupe (106, 108, 110) respectif présentant un diamètre extérieur extrême supérieur de 2 % à 10 % à celui de la pluralité des structures d'ancrage (112) restantes du groupe (106, 108, 110) respectif.

4. Élément de fixation (100) selon l'une quelconque des revendications 1 à 3, au moins une partie des structures d'ancrage (112) étant conçue sous la forme d'une structure annulaire de forme tronconique.

5. Élément de fixation (100) selon l'une quelconque des revendications 1 à 4, entre des structures annulaires respectivement voisines étant conçues des contre-dépouilles de forme annulaire, notamment des contre-dépouilles de forme annulaire fermées sur leur circonférence.

6. Élément de fixation (100) selon l'une quelconque des revendications 1 à 5, comportant au moins l'une des caractéristiques suivantes :
au moins une partie des structures d'ancrage (112) se rétrécissant sous forme conique en direction de la pointe d'extrémité (104),
au moins trois groupes (106, 108, 110) étant prévus,
chacun des groupes (106, 108, 110) comportant entre 3 et 10 structures d'ancrage (112), notamment entre 4 et 8 structures d'ancrage (112),
un groupe (106, 108, 110) plus proche de la pointe d'extrémité (104) comportant un plus grand nombre de structures d'ancrage (112) qu'un groupe (106, 108, 110) plus éloigné de la pointe d'extrémité (104),
les structures d'ancrage (112) d'un groupe (106, 108, 110) plus proche de la pointe d'extrémité (104) présentant une extension axiale plus courte que les structures d'ancrage (112) d'un groupe (106, 108, 110) plus éloigné de la pointe d'extrémité (104),
une enveloppe (180) des structures d'ancrage (112) des groupes (106, 108, 110) d'un agencement correspondant à des cylindres circulaires (182, 184, 186) concentriques juxtaposés, avec des rayons de cylindre décroissant graduellement en direction de la pointe d'extrémité (104),
un diamètre extérieur extrême des structures d'ancrage (112) augmentant graduellement de manière continue, au fur et à mesure de l'éloignement de la pointe d'extrémité (104).

7. Élément de fixation (100) selon l'une quelconque des revendications 1 à 6, comportant au moins l'une des caractéristiques suivantes :
au moins une partie des structures d'ancrage (112) présentant entre une direction d'extension axiale (150) du tronçon de tige (102) et une surface extérieure se rétrécissant de la structure d'ancrage (112) respective un angle de flanc (α) dans un ordre compris entre 10° et 30°,
un angle d'ouverture (β) de la pointe d'extrémité (104) se situant dans un ordre compris entre 30° et 75°.

8. Élément de fixation (100) selon l'une quelconque des revendications 1 à 7, comportant au moins l'une des caractéristiques suivantes :
l'élément de fixation (100) étant conçu sous la forme d'un clou qui doit être enfoncé dans le support (202) dans la direction d'extension axiale (150) de l'élément de fixation (100),
l'élément de fixation (100) étant conçu pour être introduit, notamment sans pré-perçage dans un support en bois (202), notamment dans un support en bois (202) massif, notamment par ailleurs dans un support en bois dur (202) massif.

9. Élément de fixation (100) selon l'une quelconque des revendications 1 à 8, comportant par ailleurs un tronçon de tête (114) se raccordant directement ou indirectement par sa face arrière sur le tronçon de tige (102) avec un diamètre extérieur supérieur à celui du tronçon de tige (102).

10. Agencement (200), destiné à assembler un support en bois (202) avec un profilé (204), l'agencement (200) comportant :
au moins un élément de fixation (100) selon l'une quelconque des revendications 1 à 9 ;
le profilé (204), notamment un sabot de solive destiné à recevoir un segment d'extrémité du support en bois (202) ;
l'au moins un élément de fixation (100) et le profilé (204) étant conçus de telle sorte qu'au moins un assemblage entre le support en bois (202) et le profilé (204) puisse être introduit à travers le profilé (204) dans le support en bois (202).

11. Procédé de fabrication d'un élément de fixation (100) destiné à être introduit dans un support (202), le procédé comportant :
la création d'un tronçon de tige (102) s'étendant dans la direction axiale ;
la création d'une pointe d'extrémité (104) qui se raccorde sur le tronçon de tige (102) ;
la création d'une pluralité de groupes (106, 108, 110) de structures d'ancrage (112) sur le tronçon de tige (102) qui rétrécissent en direction de la pointe d'extrémité (104), de sorte qu'un diamètre extérieur extrême soit différent pour différents groupes (106, 108, 110) de structures d'ancrage (112),
le diamètre extérieur extrême d'un groupe (106, 108, 110) respectif qui est plus proche de la pointe d'extrémité (104) qu'un autre groupe (106, 108, 110) respectif voisin dudit groupe (106, 108, 110) étant inférieur au diamètre extérieur extrême de l'autre groupe (106, 108, 110) voisin respectif,
les structures d'ancrage (112) étant conçues sous la forme de structure annulaire à l'aide d'anneaux fermés sur soi, sans assemblage continu sur d'autres anneaux,
une structure d'ancrage (112') la plus proche de la pointe d'extrémité (104) d'un groupe (106, 108, 110) respectif présentant un diamètre extérieur extrême supérieur à celui d'une pluralité de structures d'ancrage (112) restantes d'un groupe (106, 108, 110) concerné et chacune des pluralités de structures d'ancrage (112) restantes d'un groupe (106, 108, 110) respectif présentant un propre diamètre extérieur le plus grand identique ou toutes les structures d'ancrage (112) d'un groupe (106, 108, 110) respectif présentant le même diamètre extérieur.

12. Procédé destiné à introduire un élément de fixation (100) selon l'une quelconque des revendications 1 à 9 dans un support (202), lors duquel on injecte, on frappe ou on visse l'élément de fixation (100) dans le support (202).

13. Utilisation d'un élément de fixation (100) selon l'une quelconque des revendications 1 à 9, pour son introduction, notamment sans pré-perçage dans un support en bois (202), notamment dans un support en bois massif, pour l'assemblage du support en bois (202) avec un profilé (204), notamment avec un sabot de solive.
